# EUROPÄISCHE PATENTSCHRIFT

(11) **EP 1 491 978 B1**
(45) Veröffentlichungstag und Bekanntmachung des Hinweises auf die Patenterteilung: **02.11.2006**
(21) Anmeldenummer: 04014374.5
(22) Anmeldetag: 18.06.2004
(51) Int. Cl.: G05D 1/02, G02B 27/01, G08G 1/16, B60Q 1/52

(54) **Kollisionsobjekt-Erkennungssystem**
System for identification of collision objects
Systéme d' identification d' objets de collision

(30) Priorität: 27.06.2003 DE 10329054
(43) Veröffentlichungstag der Anmeldung: 29.12.2004
(73) Patentinhaber: Volkswagen Aktiengesellschaft, 38436 Wolfsburg (DE)
(72) Erfinder: Graf, Thorsten, Dr., 38518 Gifhorn (DE); Meinecke, Marc-Michael, Dr., 38524 Sassenburg (DE); Broggi, Alberto, Prof., 43100 Parma (IT); Fascioli, Alessandra, 43100 Parma (IT); Bertozzi, Massimo, 43100 Parma (IT); Grisleri, Paolo, 29010 Roveleto di Cadeo (IT)
(74) Vertreter: Banzer, Hans-Jörg

(56) Entgegenhaltungen:
- DE-A- 10 131 720
- GB-A- 2 374 228
- US-A- 5 949 331
- US-A- 5 963 148
- US-A1- 2003 218 676
- PATENT ABSTRACTS OF JAPAN Bd. 2000, Nr. 16, 8. Mai 2001 (2001-05-08) & JP 2001 018738 A (HONDA MOTOR CO LTD), 23. Januar 2001 (2001-01-23)

## Beschreibung

Die vorliegende Erfindung betrifft ein Kollisionsobjekt-Erkennungssystem, wie es insbesondere in einem Fortbewegungsmittel, z.B. einem Kraftfahrzeug oder Motorrad, eingesetzt werden kann, damit hauptsächlich ein Lenker des Fortbewegungsmittels Kollisionsobjekte erkennen kann, die er ohne Einsatz des Kollisionsobjekt-Erkennungssystems nicht oder nur schwer erkennen könnte oder damit der Lenker des Fortbewegungsmittels auf Kollisionsobjekte aufmerksam gemacht wird.

Die Patentveröffentlichung WO 01/81972 A2 offenbart ein Verfahren und eine Vorrichtung zum Aufnehmen von Infrarotbildern, wobei die aufgenommenen Infrarotbilder auf die Windschutzscheibe eines Fortbewegungsmittels projiziert werden. Der Schwerpunkt liegt bei dieser Patentveröffentlichung auf der Reduzierung der Größe, des Gewichtes und der Kosten für eine Kamera, welche die Infrarotbilder aufnimmt.

Aus der Patentveröffentlichung US 5,414,439 ist ein Nachtsichtsystem bekannt, welches in einem Fortbewegungsmittel, wie z.B. einem Kraftfahrzeug, eingesetzt wird. Dabei wird ein von dem Nachtsichtsystem aufgenommenes Infrarotbild, was eine reale Szene abbildet, in ein Videosignal umgesetzt, welches als ein Bild auf eine Windschutzscheibe oder ähnliches ausgegeben wird. Das Nachtsichtsystem passt dabei die Größe des Bildes an die entsprechende Größe der realen Szene an, so dass für einen Betrachter das von dem Nachtsichtgerät ausgegebene Bild und das Bild der realen Szene, welches er direkt durch die Windschutzscheibe sieht, gleich groß sind. Dabei kann das Nachtsichtsystem derart konfiguriert werden, dass es nur die wärmsten Objekte aus dem aufgenommenen Infrarotbild in das Videosignal umsetzt.

Aus der Patentveröffentlichung DE 101 33 283 A1 ist ein Warnsystem zur Kollisionsvermeidung bekannt, welches voraussetzt, dass ein zu schützender Verkehrteilnehmer (z.B. ein Fußgänger) eine Wamvorrichtung mit sich führt.

Aus der Patentveröffentlichung DE 101 31 720 A1 sind ein Head-Up Display zur Darstellung von Objekten sowie Mittel zur Erfassung von Objekten außerhalb eines Fahrzeuges bekannt. Dabei arbeiten die Erfassungsmittel mit einem Infrarotsensor. Die Entscheidung, ob ein Objekt relevant ist, wird mit Hilfe von Mustern (z.B. für Verkehrszeichen oder für Fußgänger) getroffen. Falls ein Objekt als relevant erachtet wird, wird eine Warnung ausgegeben und das entsprechende Objekt wird in einer Anzeige hervorgehoben.

Aus der Patentveröffentlichung DE 102 12 600 A1 ist eine Anzeigevorrichtung für Fahrzeuge mit Lichtquellen unterschiedlicher Richtschärfe bekannt.

Aus der Patentveröffentlichung DE 696 13 653 T2 ist ein Informations-Anzeigegerät für Fahrzeuge bekannt, das eine auf dem Anzeigegerät ausgegebene Information an den Ort (z.B. in einer Kreuzung) und die Bewegungsrichtung (z.B. vorwärts, rückwärts) des Fahrzeuges anpasst.

Die japanische Patentveröffentlichung JP 2001 018738 A beschreibt eine Vorrichtung, welche Kollisionsobjekte in einem von einer Kamera aufgenommenen Bild zu erkennen versucht und dann das Kollisionsobjekt auf einer Anzeige darstellt, wenn die Wahrscheinlichkeit einer Kollision hoch ist, wobei einige Daten (z.B. Bremswirkung, Geschwindigkeit) des Fahrzeugs, in welchem die Vorrichtung angeordnet ist, berücksichtigt werden.

Die GB 2374228 A offenbart eine Kollisionswarnvorrichtung, welche ein Bild erfasst und dieses darstellt. Dabei wird innerhalb des Bildes ein Abstand zu Bereichen des Bildes, welche zu analysieren sind, bestimmt. Abhängig von diesem Abstand wird das dargestellte Bild modifiziert. Zur Bildanalyse wird dabei eine einfache Technologie eingesetzt.

Eine z.B. von einer elektronischen Kamera aufgenommene Information kann für einen Betrachter, wie z.B. einen Fahrer eines Kraftfahrzeuges, sehr hilfreich sein, da dadurch Objekte für den Betrachter sichtbar werden, welche der Betrachter, z.B. aufgrund von Dunkelheit, sonst nicht wahrnehmen würde. Mit Wärmebildsystemen oder anderen Nachtsichtsystemen nach dem Stand der Technik ist es z.B. möglich, Wärme abstrahlende Objekte wie Menschen, Wild und Fahrzeuge selbst bei völliger Dunkelheit in einer Entfernung von über 150m zu erkennen. Auch bei guten Sichtbedingungen kann ein System, welches die von einer elektronischen Kamera von einer außerhalb z.B. eines Kraftfahrzeuges liegenden Umgebung aufgenommenen Bilder nach Objekten absucht, mit denen eine Kollision mit dem Kraftfahrzeug droht, für einen Fahrer des Kraftfahrzeuges wichtig sein. Auf der anderen Seite kann die Wiedergabe von Bildern, welche z.B. durch die elektronische Kamera aufgenommen worden sind, auch zu Problemen führen. Dies ist z.B. dann der Fall, wenn ein Fahrer eines Kraftfahrzeuges durch ein Betrachten dieser Bilder von der realen Verkehrssituation, welche er ohne Hilfsmittel, also z.B. ohne Wärmebild, erfassen könnte, abgelenkt wird.

Die Patentveröffentlichung WO 01/81972 A2 projiziert, wie beschrieben, ein durch eine Infrarotkamera aufgenommenes Bild auf eine Windschutzscheibe z.B. eines Kraftfahrzeuges, wodurch ein Fahrer des Kraftfahrzeuges zumindest seine Augen auf die Strasse gerichtet lassen kann. Trotzdem ist die Gefahr groß, dass der Fahrer durch ein Betrachten des von der Infrarotkamera aufgenommenen Bildes von dem Verkehrsgeschehen abgelenkt wird.

Durch eine Anpassung der Größe des Videosignals, welches von dem Nachtsichtsystem der Patentveröffentlichung US 5,414,439 ausgegeben wird, tut sich ein Betrachter leichter, ein Objekt, welches er in der Realität gesehen hat, in dem Videosignal wieder zu finden, wodurch er sich in dem Videosignal leichter zurecht findet. Da in einem Wärmebild, welches von dem Nachtsichtgerät bearbeitet wurde, aber bisweilen Objekte hervorgehoben werden, welche in einem bestimmten Einsatzfall, z.B. beim Fahren eines Kraftfahrzeuges, ohne Belang sind, wie z.B. ein heißer Schornstein, wird auch hier der Betrachter oft unnötig abgelenkt. Dies ist auch der Fall, wenn nur die wärmsten Objekte im Videosignal zu sehen sind.

Das Head-Up Display System aus der Patentveröffentlichung DE 101 31 720 A1 analysiert, wie beschrieben, ein mit Erfassungsmitteln (z.B. mit einer Videokamera) aufgenommenes Bild mit Hilfe von Mustern. Wenn Objekte als relevant erachtet werden, werden diese Objekte (z.B. ein Verkehrszeichen oder ein Fußgänger) entsprechend hervorgehoben, wobei auch eine Warnung ausgegeben werden kann. Auch dieses System gibt das mit den Erfassungsmitteln aufgenommene Bild wieder, auch wenn keine für den Betrachter relevante Information enthalten ist.

Die bestehenden Systeme geben Bilder unabhängig davon aus, ob die Bilder für einen Betrachter, z.B. für einen Fahrer eines Kraftfahrzeuges, relevante Information enthält oder nicht, weshalb die Gefahr besteht, dass der Betrachter von den ausgegebenen Bildern unnötigerweise abgelenkt wird.

Außerdem ist z.B. ein Fahrer eines Kraftfahrzeuges durch die permanente Wiedergabe von Bildern gezwungen, seine Augen ständig umzufokussieren, d.h. er wechselt zwischen der fernen Beobachtung durch die Windschutzscheibe und der nahen Beobachtung des Bildschirmes. Diese Umfokussierung ist für den Fahrer anstrengend und kann unter Umständen zu Kopfschmerzen führen. Neben der körperlichen Anstrengung bedeutet die Umfokussierung auch einen Zeitaufwand für den Menschen, zumal die Perspektive des Wiedergabebildes im Normalfall nicht mit dem Sichtfeld des Menschen übereinstimmt (z.B. stimmen die Größenverhältnisse selten überein). Dieser Zeitaufwand und die Wiedergabe der Wiedergabebilder selbst kann die Aufmerksamkeit des Fahrers weiter beeinträchtigen, so dass im schlimmsten Fall durch die Wiedergabe der Wiedergabebilder gefährliche Situationen ursächlich entstehen können.

Der Erfindung liegt daher die Aufgabe zugrunde, ein Kollisionsobjekt-Erkennungssystem bereitzustellen, bei dem die zuvor beschriebenen Probleme gelöst sind und eine unnötige Beeinträchtigung der Verkehrssicherheit durch von dem Kollisionsobjekt-Erkennungssystem wiedergegebene Wiedergabebilder vermieden wird, indem insbesondere die aktuelle Fahrsituation bei der Entscheidung, ob ein Objekt ein Kollisionsobjekt ist, einbezogen wird.

Diese Aufgabe wird erfindungsgemäß durch ein Kollisionsobjekt-Erkennungssystem gemäß Anspruch 1 gelöst. Die abhängigen Ansprüche definieren bevorzugte und vorteilhafte Ausführungen der Erfindung.

Im Rahmen der vorliegenden Erfindung umfasst ein Kollisionsobjekt-Erkennungssystem Aufnahmemittel zur Aufnahme eines Bildes, Bildwiedergabemittel zur Wiedergabe eines Wiedergabebilds, Umgebungsdatenerfassungsmittel zum Erfassen von Umgebungsdaten und Bildverarbeitungsmittel. Dabei ist den Bildverarbeitungsmitteln das Bild der Aufnahmemittel zuführbar. Die Bildverarbeitungsmittel erkennen in dem Bild automatisch Kollisionsobjekte, wobei sie das Bild hierzu auswerten. Bei dieser Auswertung sind die Bildverarbeitungsmittel derart ausgestaltet, dass sie nur dann ein Objekt als Kollisionsobjekt erkennen, wenn dies mit einer Fahrsituation zusammenpasst, wobei die Fahrsituation durch die Umgebungsdaten, die ausgewählt aus einer Gruppe umfassend eine Ortsbestimmung und eine Uhrzeit sind, und eine Geschwindigkeit des Kollisionsobjekterkennungssystems definiert ist. Dabei werden die Bildwiedergabemittel zur Wiedergabe eines Wiedergabebildes nur dann von den Bildverarbeitungsmitteln eingeschaltet, wenn in dem von den Aufnahmemitteln aufgenommenen Bild ein Kollisionsobjekt erkannt wird. Dadurch wird die Aufmerksamkeit eines Betrachters nur dann auf das Wiedergabebild gelenkt, wenn das Wiedergabebild für den Betrachter relevante Information enthält. Zusätzlich wird die Aufmerksamkeit des Betrachters durch die plötzliche Wiedergabe des Wiedergabebildes auf das Wiedergabebild gelenkt.

Wenn die Bildverarbeitungsmittel kein Kollisionsobjekt mehr in dem von den Aufnahmemitteln zugeführten Bild erkennen, kann das Wiedergabebild langsam ausgeblendet werden. Dieses langsame Ausblenden des Wiedergabebildes verhindert ebenfalls eine Ablenkung des Betrachters, da es z. B. nicht zum Flackern kommen kann. Ein Flackern kann z.B. dann auftreten, wenn die Bildverarbeitungsmittel für kurze Zeit ein Kollisionsobjekt verlieren und die Bildwiedergabemittel in dieser Zeit kein Wiedergabebild wiedergeben würden.

Zusätzlich kann eine entsprechende Warnung ausgegeben werden, sobald ein Kollisionsobjekt erkannt wird, wobei zusätzlich ein Abbild des erkannten Kollisionsobjektes in dem Wiedergabebild kenntlicher gemacht werden kann. Dadurch ist es möglich, die Aufmerksamkeit eines Betrachters auf das Wiedergabebild zu lenken, welches relevante Information für den Betrachter enthält, wobei die Aufmerksamkeit nur auf den Bereich des Wiedergabebildes gelenkt wird, der für den Betrachter relevante Information enthält.

Außerdem kann die Erkennung von Kollisionsobjekten an die Fahrsituation angepasst werden. Z.B. kann die Erkennung von Kollisionsobjekten abhängig von der Uhrzeit in einem Innenstadtbereich nahezu vollständig unterdrückt werden, da hier im Allgemeinen mit einem sehr hohen Fußgängeraufkommen gerechnet werden muss.

Darüber hinaus kann das Kollisionsobjekt-Erkennungssystem aufgrund von Wahrscheinlichkeiten errechnen, ob eine Gefahr besteht, dass ein erkanntes Kollisionsobjekt mit dem Kollisionsobjekt-Erkennungssystem kollidieren wird. In diesem Fall kann das Kollisionsobjekt-Erkennungssystem eine entsprechende Warnung auszugeben. Eine weitere Möglichkeit besteht darin, dass das Kollisionsobjekt-Erkennungssystem nur in dem Fall, in dem eine Kollisionswahrscheinlichkeit besteht, ein erkanntes Objekt als Kollisionsobjekt erkennt oder einordnet. In diesem Fall würde z.B. ein Lenker eines Kraftfahrzeuges nur dann seine Aufmerksamkeit auf die Wiedergabebilder lenken, wenn das Kollisionsobjekt-Erkennungssystem eine Kollision als wahrscheinlich erachtet.

Die vorliegende Erfindung eignet sich vorzugsweise zum Einsatz bei Kraftfahrzeugen, um beispielsweise Lebewesen (insbesondere Fußgänger, Tiere (z.B. Wild)) oder Fahrzeuge automatisch zu erkennen. Selbstverständlich ist die Erfindung aber nicht auf diesen Anwendungsbereich beschränkt. Des Weiteren eignet sich die vorliegende Erfindung sowohl für eine Anwendung in der Nacht, um z.B. ein Kollisionsobjekt darzustellen, was ein Betrachter sonst überhaupt nicht wahrnehmen könnte, als auch für eine Anwendung am Tag, um z.B. einen Betrachter vor einem Kollisionsobjekt zu warnen, welches dieser noch nicht wahrgenommen hat.

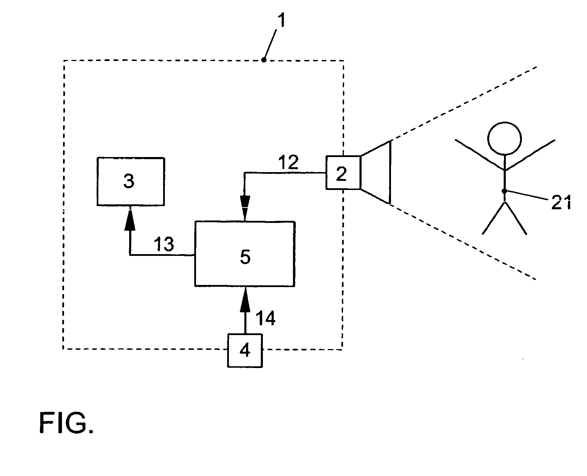

Die vorliegende Erfindung wird nachfolgend näher unter Bezugnahme auf die beigefügte Zeichnung anhand bevorzugter Ausführungsbeispiele erläutert.

Die einzige Figur zeigt ein Blockschaltbild eines Kollisionsobjekt-Erkennungssystems gemäß einer bevorzugten Ausführungsform der vorliegenden Erfindung.

In der Figur ist schematisch ein Kollisionsobjekt-Erkennungssystem 1 dargestellt, welches z.B. in einem Kraftfahrzeug eingesetzt werden kann. Das dargestellte Kollisionsobjekt-Erkennungssystem umfasst einen Mikroprozessor 5, eine Kamera 2 zur Aufnahme eines Bildsignals 12 der Umgebung, welche hier beispielsweise durch einen Fußgänger 21 repräsentiert ist, ein Bildwiedergabegerät 3 zur Wiedergabe eines Wiedergabebildsignals 13 und Umgebungsdatenerfassungsmittel 4 zur Erfassung von Umgebungsdaten 14. Dabei werden das Bildsignal 12 und eventuell die Umgebungsdaten 14, die z.B. von anderer Fahrzeugsensorik stammen können, in den Mikroprozessor 5 eingespeist, während das Wiedergabebildsignal 13, welches ein von dem Mikroprozessor 5 überarbeitetes Abbild des Bildsignals 12 ist, von dem Mikroprozessor 5 erzeugt wird.

Der Mikroprozessor 5 untersucht das von der Kamera 2 aufgenommene Bildsignal 12 auf Kollisionsobjekte 21. Dabei kann mit Objektumrissen, Objektmodellen und dynamischen Strukturen gearbeitet werden. Das heißt das Kollisionsobjekt-Erkennungssystem kann innerhalb des Bildsignals 12 nach Objektumrissen oder Abbildern von Objektmodellen, welche im Gegensatz zu Objektumrissen auch die Fläche der Objekte berücksichtigen, suchen. Außerdem oder zusätzlich können dynamische Strukturen, mit deren Hilfe auch Bewegungsabläufe von Objekten, z. B. Fußgängern, einbezogen werden können, ein Erkennen von Objekten verbessern. Nur wenn ein Kollisionsobjekt 21 erkannt wird, werden die Bildwiedergabemittel 3 zur Wiedergabe des Wiedergabebildes eingeschaltet. Dabei kann ein Kollisionsobjekt z. B. ein Mensch, ein Fahrzeug und/oder ein Tier sein. Die Erkennung eines Tiers als Kollisionsobjekt kann an eine bestimmte Mindestgröße gekoppelt sein.

Wenn die Bildwiedergabemittel 3 ein Wiedergabebild wiedergeben und die Bildverarbeitungsmittel kein Kollisionsobjekt 21 in dem von den Aufnahmemitteln 2 aufgenommenen Bild über eine bestimmte Zeitdauer mehr erkennen, können die Wiedergabebilder z.B. langsam ausgeblendet werden. Unter einem Ausblenden wird ein langsames, d.h. über eine gewisse Zeit andauerndes, stetig zunehmendes Abdunkeln des Wiedergabebildes durch die Bildwiedergabemittel 3 verstanden. Sollte der Mikroprozessor 5 während dieser Zeit des Ausblendens wieder eine Kollisionsobjekt 21 erkennen, kann das Wiedergabebild von den Bildwiedergabemitteln 3 wieder normal dargestellt und das Ausblenden abgebrochen werden. Eine weitere Möglichkeit ist, mit dem Ausblenden erst dann zu beginnen, wenn eine gewisse Wartezeit lang kein Kollisionsobjekt 21 in dem von den Aufnahmemitteln 2 aufgenommenen Bild erkannt wird. Sollte während der Wartezeit eine Kollisionsobjekt 21 erkannt werden, kann die Wartezeit wieder erneut zu laufen beginnen, wenn wiederum kein Kollisionsobjekt 21 erkannt wird.

Das Wiedergabebild kann von Bildverarbeitungsmitteln 5 derart überarbeitet werden, dass darin enthaltene erkannte Kollisionsobjekte 21 kenntlicher gemacht werden. Dadurch ist es einem Betrachter des Wiedergabebildes möglich, Kollisionsobjekte 21 in dem Wiedergabebild rascher zu erfassen. Dieses Kenntlicher-Machen kann ein Verstärken der Kontur oder des Umrisses des erkannten Kollisionsobjektes 21 und/oder die farbliche Hervorhebung des Abbildes des erkannten Kollisionsobjektes 21 umfassen.

Sobald die Bildverarbeitungsmittel 5 ein Kollisionsobjekt 21 erkennen, kann ein Hinweis ausgegeben werden, so dass ein potenzieller Betrachter des Wiedergabebildes neben dem plötzlichen Erscheinen des Wiedergabebildes eine weitere Warnung erhält. Dieser Hinweis kann ein Ausgeben eines akustischen Signals (z.B. eines Warntons), ein Ausgeben eines optischen Signals und/oder ein Ausgeben eines mit dem menschlichen Tastsinn erfassbaren Signals (z.B. Rütteln des Lenkrads) sein.

Die Bildverarbeitungsmittel 5 können derart ausgestaltet sein, dass sie eine Wahrscheinlichkeit berechnen, mit der ein erkanntes Kollisionsobjekt mit dem Kollisionsobjekt-Erkennungssystem 1 zusammenstößt. Die Bildverarbeitungsmittel 5 können nun ein Objekt nur dann als Kollisionsobjekt 21 erkennen, wenn diese Wahrscheinlichkeit einen bestimmten Wert übersteigt. Eine weitere Möglichkeit besteht darin, dass die Bildverarbeitungsmittel 5 eine spezielle Warnung ausgeben, wenn diese Wahrscheinlichkeit über einer bestimmten Grenze liegt.

Die Aufnahmemittel können eine Fern-Infrarot-Kamera, eine im Nah-Infrarot-Spektrum empfindliche Kamera, welche in Nah-Infrarot-Spektrum empfindlich ist, und/oder eine herkömmliche visuelle Kamera 2 sein. Die Bildwiedergabemittel 3 können ein Head-Up-Display, einen Bildschirm eines Navigationssystems, eine Armaturenanzeige und/oder sonstige zusätzliche Anzeigesysteme umfassen.

Es ist möglich, die Erkennung von Kollisionsobjekten 21 von der Fahrsituation, welche wiederum von Umgebungsdaten 14 beeinflusst wird, abhängig zu machen. Die Umgebungsdaten 14 können den momentanen Ort, an dem sich das Kollisionsobjekt-Erkennungssystem befindet, die Uhrzeit und weitere Fahrzeugdaten umfassen. Dadurch kann das Kollisionsobjekt-Erkennungssystem derart ausgestaltet sein, dass es Objekte (z. B. Fußgänger) in einer Innenstadt nur spät nachts als Kollisionsobjekte erkennt, während es z. B. tagsüber einen Fußgänger in einer Innenstadt nicht als Kollisionsobjekt erkennt, da das Kollisionsobjekt-Erkennungssystem davon ausgeht, dass zu dieser Zeit viele Fußgänger (d.h. potenzielle Kollisionsobjekte) in der Innenstadt sind. Des Weiteren ist es möglich, dass das Kollisionsobjekt-Erkennungssystem 1 nur dann Kollisionsobjekte 21 erkennt, wenn die Geschwindigkeit des Kollisionsobjekt-Erkennungssystems 1 größer als eine Schranke ist, so dass, falls die Geschwindigkeit unterhalb dieser Schranke liegt, keine Wiedergabebilder, welche auch ablenken können, ausgegeben werden.

### BEZUGSZEICHENLISTE

- 1: Erkennungssystem
- 2: Kamera
- 3: Bildwiedergabegerät
- 4: Umgebungsdatenerfassungsmittel
- 5: Mikroprozessor
- 12: Bildsignal
- 13: Wiedergabebildsignal
- 14: Umgebungsdaten
- 21: Fußgänger

## Patentansprüche

1. Kollisionsobjekt-Erkennungssystem,
mit Aufnahmemitteln (2) zur Aufnahme eines Bildes,
mit Bildwiedergabemitteln (3) zur Wiedergabe eines Wiedergabebildes abhängig von dem von den Aufnahmemitteln (2) aufgenommenen Bild, und
mit Bildverarbeitungsmitteln (5), welchen das von den Aufnahmemitteln (2) aufgenommene Bild zuführbar ist und welche derart ausgestaltet sind, dass sie durch Auswertung des Bildes ein Kollisionsobjekt (21) darin erkennen,
wobei die Bildverarbeitungsmittel (5) zur Ansteuerung der Bildwiedergabemittel (3) derart ausgestaltet sind, dass die Bildwiedergabemittel (3) zur Wiedergabe des Wiedergabebildes nur dann eingeschaltet werden, wenn die Bildverarbeitungsmittel (5) ein Kollisionsobjekt (21) in dem von den Aufnahmemitteln (2) aufgenommenen Bild erkannt haben,
wobei, es Umgebungsdatenerfassungsmittel (4) zum Erfassen von Umgebungsdaten (14) besitzt, wobei diese Umgebungsdaten (14) den Bildverarbeitungsmitteln (5) zuführbar sind, wobei die Bildverarbeitungsmittel (5) derart ausgestaltet sind, dass sie nur dann ein Objekt als Kollisionsobjekt (21) erkennen, wenn dies mit einer Fahrsituation zusammenpasst, wobei die Fahrsituation durch die Umgebungsdaten (14) und eine Geschwindigkeit des Kollisionsobjekt-Erkennungssystems (1) definiert ist, **dadurch gekennzeichnet, dass** die Umgebungsdaten (14) ausgewählt aus einer Gruppe umfassend eine Ortsbestimmung und eine Uhrzeit sind.

2. Kollisionsobjekt-Erkennungssystem nach Anspruch 1, **dadurch gekennzeichnet, dass** die Bildverarbeitungsmittel (5) und die Bildwiedergabemittel (3) derart ausgestaltet sind, dass sie bei Nichterkennen eines Kollisionsobjektes (21) durch die Bildverarbeitungsmittel (5) nach Ablauf einer bestimmten Zeitspanne ein von den Bildwiedergabemitteln (3) wiedergegebenes Wiedergabebild ausblenden.

3. Kollisionsobjekt-Erkennungssystem nach Anspruch 1 oder 2, **dadurch gekennzeichnet, dass** die Bildverarbeitungsmittel (5) derart ausgestaltet sind, dass sie beim Erkennen eines Kollisionsobjektes (21) in dem von den Aufnahmemitteln (2) aufgenommenen Bild das Bild derart überarbeiten, dass in dem überarbeiteten Bild das Kollisionsobjekt (21) gegenüber dem von den Aufnahmemitteln (2) aufgenommenen Bild kenntlicher gemacht ist, um das überarbeitete Bild den Bildwiedergabemitteln (3) zur Wiedergabe als Wiedergabebild zuzuführen.

4. Kollisionsobjekt-Erkennungssystem nach Anspruch 3, **dadurch gekennzeichnet, dass** das Kenntlicher-Machen ein Verstärken einer Kontur des Kollisionsobjektes (21) und/oder ein farbliches Hervorheben eines Abbilds des Kollisionsobjektes (21) in dem Bild im Vergleich zu dem Fall, dass die Bildverarbeitungsmittel (5) dieses Kollisionsobjekt (21) nicht in dem Bild erkennen, umfasst.

5. Kollisionsobjekt-Erkennungssystem nach einem der vorhergehenden Ansprüche, **dadurch gekennzeichnet, dass** die Bildverarbeitungsmittel (5) derart ausgestaltet sind, dass sie einen Hinweis ausgeben, wenn die Bildverarbeitungsmittel (5) zu einem bestimmten Zeitpunkt ein Kollisionsobjekt (21) in dem von den Aufnahmemitteln (2) aufgenommenen Bild erkennen.

6. Kollisionsobjekt-Erkennungssystem nach Anspruch 5, **dadurch gekennzeichnet, dass** der Hinweis ausgewählt aus einer Gruppe umfassend ein akustisches Signal, ein optisches Signal und ein mit dem menschlichen Tastsinn erfassbares Signal ist.

7. Kollisionsobjekt-Erkennungssystem nach einem der vorhergehenden Ansprüche, **dadurch gekennzeichnet, dass** die Bildverarbeitungsmittel (5) derart ausgestaltet sind, dass sie ein Objekt in dem von den Aufnahmemitteln (2) aufgenommenen Bild dann als Kollisionsobjekt erkennen, wenn es als ein Objekt ausgewählt aus einer Gruppe umfassend einen Menschen, ein Fahrzeug und ein Tier erkannt wird.

8. Kollisionsobjekt-Erkennungssystem nach einem der vorhergehenden Ansprüche, **dadurch gekennzeichnet, dass** die Bildverarbeitungsmittel (5) derart ausgestaltet sind, dass sie nur dann ein Kollisionsobjekt (21) erkennen, wenn die Bildverarbeitungsmittel (5) durch eine Berechnung erkennen, dass ein Objekt in dem von den Aufnahmemitteln (2) aufgenommenen Bild dem Kollisionsobjekt-Erkennungssystem (1) zu nah kommen wird, wobei die Bildverarbeitungsmittel (5) diese Berechnung basierend auf Daten durchführen, welche aus einer Gruppe umfassend einen Abstand des Objektes (21) von dem Kollisionsobjekt-Erkennungssystem (1), eine Bewegungsrichtung des Objektes (21), eine Geschwindigkeit des Objektes (21), eine Bewegungsrichtung des Kollisionsobjekt-Erkennungssystems (1) und eine Geschwindigkeit des Kollisionsobjekt-Erkennungssystems (1) ausgewählt sind.

9. Kollisionsobjekt-Erkennungssystem nach einem der Ansprüche 1 bis 8, **dadurch gekennzeichnet, dass** die Bildverarbeitungsmittel (5) derart ausgestaltet sind, dass sie ein Warnsignal ausgeben, wenn die Bildverarbeitungsmittel (5) durch eine Berechnung erkennen, dass ein erkanntes Kollisionsobjekt (21) dem Kollisionsobjekt-Erkennungssystem (1) zu nah kommen wird, wobei die Bildverarbeitungsmittel (5) diese Berechnung basierend auf erfassten Daten durchführen, welche aus einer Gruppe umfassend einen Abstand des Kollisionsobjektes (21) von dem Kollisionsobjekt-Erkennungssystem (1), eine Bewegungsrichtung des Kollisionsobjektes (21), eine Geschwindigkeit des Kollisionsobjektes (21), eine Bewegungsrichtung des Kollisionsobjekt-Erkennungssystems (1) und eine Geschwindigkeit des Kollisionsobjekt-Erkennungssystems (1) ausgewählt sind.

10. Kollisionsobjekt-Erkennungssystem nach einem der vorhergehenden Ansprüche, **dadurch gekennzeichnet, dass** die Aufnahmemittel ausgewählt aus einer Gruppe umfassend eine Fern-Infrarot-Kamera, eine Nah-Infrarot-Spektrum empfindliche Kamera und eine Videokamera (2) sind.

11. Kollisionsobjekt-Erkennungssystem nach einem der vorhergehenden Ansprüche, **dadurch gekennzeichnet, dass** die Bildwiedergabemittel (3) ausgewählt aus einer Gruppe umfassend ein Head-Up-Display in einem Armaturenbrett eines Fahrzeuges, ein Bildschirm eines Navigationssystems und eine Armaturenanzeige eines Fahrzeuges sind.

12. Kollisionsobjekt-Erkennungssystem nach einem der vorhergehenden Ansprüche, **dadurch gekennzeichnet, dass** das Kollisionsobjekt-Erkennungssystem (1) kein Kollisionsobjekt erkennt, wenn die Geschwindigkeit des Kollisionsobjekt-Erkennungssystems (1) einen Grenzwert unterschreitet.

13. Kollisionsobjekt-Erkennungssystem nach einem der vorherigen Ansprüche, **dadurch gekennzeichnet, dass** die Bildverarbeitungsmittel (5) zur Erkennung von Kollisionsobjekten (21) in dem von den Aufnahmemitteln (2) aufgenommenen Bild Objektumrisse, Objektmuster und/oder dynamische Strukturen mit dem aufgenommenen Bild vergleichen.

14. Fortbewegungsmittel mit einem Kollisionsobjekt-Erkennungssystem (1) nach einem der vorhergehenden Ansprüche.

## Claims

1. System for identification of collision objects,
having recording means (2) for recording an image,
having image reproduction means (3) for reproducing a reproduction image as a function of the image recorded by the recording means (2), and
having image processing means (5) to which the image which is recorded by the recording means (2) can be fed and which are configured in such a way that by evaluating the image they identify a collision object (21) therein,
the image processing means (5) being configured to actuate the image reproduction means (3) in such a way that the image reproduction means (3) are switched on so as to reproduce the reproduction image only if the image processing means (5) have identified a collision object (21) in the image recorded by the recording means (2), said system having surroundings-data-acquiring means (4) for acquiring data (14) on the surroundings, this surroundings data (14) being capable of being fed to the image processing means (5), the image processing means (5) being configured in such a way that they identify an object as a collision object (21) only if this fits a driving situation, and the driving situation being defined by the surroundings data (14) and a speed of the system (1) for identifying a collision object, **characterized in that** the surroundings data (14) is selected from a group comprising a determination of a locality and a time.

2. System for identifying a collision object according to Claim 1, **characterized in that** the image processing means (5) and the image reproduction means (3) are configured in such a way that when a collision object (21) is not identified by the image processing means (5), they eliminate a reproduction image reproduced by the image reproduction means (3) after the expiry of a certain time period.

3. System for identifying a collision object according to Claim 1 or 2, **characterized in that** the image processing means (5) are configured in such a way that when a collision object (21) is identified in the image recorded by the recording means (2), they modify the image in such a way that in the modified image the collision object (21) is made more readily identifiable compared to the image recorded by the recording means, (2), in order to supply the modified image to the image recording means (3) for reproduction as a reproduction image.

4. System for identifying a collision odject according to Claim 3, **characterized in that** making an image more readily identifiable comprises enhancing a contour of the collision object (21) and/or highlighting an image of the collision object (21) in the overall image colour compared to the case in which the image processing means (5) do not identify this collision object (21) in the image.

5. System for identifying a collision object according to one of the preceding claims, **characterized in that** the image processing means (5) are configured in such a way that they output an indication if at a specific time the image processing means (5) identify a collision object (21) in the image recorded by the recording means (2).

6. System for identifying a collision object according to Claim 5, **characterized in that** the indication is selected from a group comprising an audible signal, a visual signal and a signal which can be sensed with the human sense of touch.

7. System for detecting a collision object according to one of the preceding claims, **characterized in that** the image processing means (5) are configured in such a way that they identify an object in the image recorded by the recording means (2) as a collision object if it is identified as an object selected from a group comprising a person, a vehicle and an animal.

8. System for identifying a collision object according to one of the preceding claims, **characterized in that** the image processing means (5) are configured in such a way that they identify a collision object (21) only if the image processing means (5) identify, by means of a calculation, that an object in the image recorded by the recording means (2) will come too near to the system (1) for identifying a collision object, the image processing means (5) carrying out this calculation on the basis of data which is selected from a group comprising a distance of the object (21) from the system (1) for identifying a collision object, a direction of movement of the object (21), a speed of the object (21), a direction of movement of the system (1) for identifying a collision object, and a speed of the system (1) for identifying a collision object.

9. System for identifying a collision object according to one of Claims 1 to 8, **characterized in that** the image processing means (5) are configured in such a way that they output a warning signal if the image processing means (5) identify, by means of a calculation, that an identified collision object (21) will come too near to the system (1) for identifying a collision object, the image processing means (5) carrying out this calculation on the basis of acquired data which is selected from a group comprising a distance of the collision object (21) from the system (1) for identifying a collision object, a direction of movement of the collision object (21), a speed of the collision object (21), a direction of movement of the system (1) for identifying a collision object, and a speed of the system (1) for identifying a collision object.

10. System for identifying a collision object according to one of the preceding claims, **characterized in that** the recording means are selected from a group comprising a far-infrared camera, a camera which is sensitive to the near-infrared spectrum and a video camera.

11. System for identifying a collision object according to one of the preceding claims, **characterized in that** the image reproduction means (3) are selected from a group comprising a head-up display in a dashboard of a vehicle, a screen of a navigation system and a dashboard display of a vehicle.

12. System for identifying a collision object according to one of the preceding claims, **characterized in that** the system (1) for identifying a collision object does not identify a collision object if the speed of the system (1) for identifying a collision object drops below a limiting value.

13. System for identifying a collision object according to one of the preceding claims, **characterized in that** in order to identify collision objects (21) in the image recorded by the recording means (2) the image processing means (5) compare object outlines, object patterns and/or dynamic structures with the recorded image.

14. Locomotion means having a system (1) for identifying a collision object according to one of the preceding claims.

## Revendications

1. Système d'identification d'objets de collision comprenant des moyens d'enregistrement (2) destinés à enregistrer une image, comprenant des moyens de reproduction d'image (3) pour reproduire une image reproduite en fonction de l'image enregistrée avec les moyens d'enregistrement (2) et comprenant des moyens de traitement d'image (5) auxquels peut être acheminée l'image enregistrée par les moyens d'enregistrement (2) et qui sont configurés de telle sorte qu'ils identifient dans l'image par interprétation de celle-ci un objet de collision (21), les moyens de traitement d'image (5) étant configurés pour commander les moyens de reproduction d'image (3) de telle sorte que les moyens de reproduction d'image (3) ne sont activés pour reproduire l'image reproduite que lorsque les moyens de traitement d'image (5) ont identifié un objet de collision (21) dans l'image enregistrée par les moyens d'enregistrement (2), celui-ci possédant des moyens d'acquisition des données d'environnement (4) destinés à acquérir des données d'environnement (14), ces données d'environnement (14) pouvant être acheminées aux moyens de traitement d'image (5), les moyens de traitement d'image (5) étant configurés de telle sorte qu'ils n'identifient un objet ne tant qu'objet de collision (21) que lorsque cela coïncide avec une situation de conduite, la situation de conduite étant définie par les données d'environnement (14) et une vitesse du système d'identification d'objets de collision (1), **caractérisé en ce que** les données d'environnement (14) sont sélectionnées dans un groupe comprenant une détermination de lieu et une heure.

2. Système d'identification d'objets de collision selon la revendication 1, **caractérisé en ce que** les moyens de traitement d'image (5) et les moyens de reproduction d'image (3) sont configurés de telle sorte qu'en cas de non-identification d'un objet de collision (21) par les moyens de traitement d'image (5), ils masquent une image reproduite par les moyens de reproduction d'image (3) après écoulement d'une période donnée.

3. Système d'identification d'objets de collision selon la revendication 1 ou 2, **caractérisé en ce que** les moyens de traitement d'image (5) sont configurés de telle sorte que lors de la détection d'un objet de collision (21) dans l'image enregistrée par les moyens d'enregistrement (2), ils traitent l'image de telle sorte que l'objet de collision (21) soit rendu plus reconnaissable dans l'image traitée par rapport à l'image enregistrée par les moyens d'enregistrement (2) afin d'acheminer l'image traitée aux moyens de reproduction d'image (3) en vue de la reproduire en tant qu'image reproduite.

4. Système d'identification d'objets de collision selon la revendication 3, **caractérisé en ce que** l'action de rendre plus reconnaissable comprend un renforcement d'un contour de l'objet de collision (21) et/ou une accentuation colorée d'une représentation de l'objet de collision (21) dans l'image en comparaison du cas où les moyens de traitement d'image (5) n'identifient pas cet objet de collision (21) dans l'image.

5. Système d'identification d'objets de collision selon l'une des revendications précédentes, **caractérisé en ce que** les moyens de traitement d'image (5) sont configurés de telle sorte qu'ils délivrent une indication lorsque les moyens de traitement d'image (5) identifient à un moment donné un objet de collision (21) dans l'image enregistrée par les moyens d'enregistrement (2).

6. Système d'identification d'objets de collision selon la revendication 5, **caractérisé en ce que** l'indication est sélectionnée dans un groupe comprenant un signal sonore, un signal visuel et un signal perceptible par le sens du toucher humain.

7. Système d'identification d'objets de collision selon l'une des revendications précédentes, **caractérisé en ce que** les moyens de traitement d'image (5) sont configurés de telle sorte qu'ils identifient un objet dans l'image enregistrée par les moyens d'enregistrement (2) comme étant un objet de collision lorsqu'il est identifié comme étant un objet sélectionné dans un groupe comprenant une personne, un véhicule et un animal.

8. Système d'identification d'objets de collision selon l'une des revendications précédentes, **caractérisé en ce que** les moyens de traitement d'image (5) sont configurés de telle sorte qu'ils n'identifient un objet de collision (21) que lorsque les moyens de traitement d'image (5) identifient par un calcul qu'un objet dans l'image enregistrée par les moyens d'enregistrement (2) se rapprochera trop près du système d'identification d'objets de collision (1), les moyens de traitement d'image (5) réalisant ce calcul en se basant sur des données qui sont sélectionnées dans un groupe comprenant une distance de l'objet (21) du système d'identification d'objets de collision (1), un sens de déplacement de l'objet (21), une vitesse de l'objet (21), un sens de déplacement du système d'identification d'objets de collision (1) et une vitesse du système d'identification d'objets de collision (1).

9. Système d'identification d'objets de collision selon l'une des revendications 1 à 8, **caractérisé en ce que** les moyens de traitement d'image (5) sont configurés de telle sorte qu'ils délivrent un signal d'alerte lorsque les moyens de traitement d'image (5) identifient par un calcul qu'une objet de collision (21) identifié se rapproche de trop près du système d'identification d'objets de collision (1), les moyens de traitement d'image (5) réalisant ce calcul en se basant sur des données acquises qui sont sélectionnées dans un groupe comprenant une distance de l'objet de collision (21) du système d'identification d'objets de collision (1), un sens de déplacement de l'objet de collision (21), une vitesse de l'objet de collision (21), un sens de déplacement du système d'identification d'objets de collision (1) et une vitesse du système d'identification d'objets de collision (1).

10. Système d'identification d'objets de collision selon l'une des revendications précédentes, **caractérisé en ce que** les moyens d'enregistrement sont choisis dans un groupe comprenant une caméra infrarouge distante, une caméra sensible au spectre infrarouge proche et une caméra vidéo (2).

11. Système d'identification d'objets de collision selon l'une des revendications précédentes, **caractérisé en ce que** les moyens de reproduction d'image (3) sont choisis dans un groupe comprenant un collimateur de conduite dans un tableau de bord d'un véhicule, un écran d'un système de navigation et un indicateur de tableau de bord d'un véhicule.

12. Système d'identification d'objets de collision selon l'une des revendications précédentes, **caractérisé en ce que** le système d'identification d'objets de collision (1) n'identifie pas d'objet de collision lorsque la vitesse du système d'identification d'objets de collision (1) est inférieure à une valeur limite.

13. Système d'identification d'objets de collision selon l'une des revendications précédentes, **caractérisé en ce que** les moyens de traitement d'image (5), pour identifier des objets de collision (21) dans l'image enregistrée par les moyens d'enregistrement (2), comparent des contours d'objet, des modèles d'objet et/ou des structures dynamiques avec l'image enregistrée.

14. Moyen de déplacement comprenant un système d'identification d'objets de collision (1) selon l'une des revendications précédentes.
